# EUROPEAN PATENT SPECIFICATION

(11) **EP 1 261 087 B1**
(45) Date of publication and mention of the grant of the patent: **14.12.2011**
(21) Application number: 02011132.4
(22) Date of filing: 20.05.2002
(51) Int. Cl.: H02B 1/052

(54) **Device for fastening an electrical circuit breaker to a supporting guide**
Vorrichtung zum Befestigen eines Leistungsschalters auf einer Tragschiene
Dispositif pour la fixation d'un disjoncteur sur un rail de support

(30) Priority: 22.05.2001 IT MI20011064
(43) Date of publication of application: 27.11.2002
(73) Proprietor: GEWISS S.p.A., 24069 Cenate Sotto (Bergamo) (IT)
(72) Inventor: Bosatelli, Domenico, 24069 Cenate Sotto, (Bergamo) (IT); Contardi, Augusto, 21100 Varese (IT); Pianezzola, Sergio, 21100 Calcinata del Pesce, (Varese) (IT)
(74) Representative: Forattini, Amelia

(56) References cited:
- EP-A- 0 874 433

## Description

The present invention relates to a device for fastening an electrical circuit breaker to a supporting guide. (See EP-A-0 874 433).

Conventional devices for fastening an electrical circuit breaker to a standardized guide comprise a bolt that can slide along the rear face of the circuit breaker and is pushed by a return spring into a position for engaging a protruding edge of a guide.

The bolt is disengaged by actuating an actuation means that is accessible from the front of the circuit breaker and is arranged across it.

The actuation means is substantially a rotating rod provided with a screw head suitable to be engaged by a tool and provided, at its opposite end, with a cam.

The rotation of the screw head moves the cam into a position in which it contrasts the action of the spring in order to disengage the bolt and into a position in which it does not act on the spring. The screw head is provided with a pointer, which cooperates with a fixed member on the front face of the circuit breaker in order to discriminate the two positions.

The aim of the present invention is to provide a device, for fastening an electrical circuit breaker to a supporting guide, improved with respect to the prior art.

An object of the invention is to provide a device that can be actuated from the front.

Another object of the invention is to provide a device in which the operating position of the bolt is immediately evident.

Another object is to provide a device that is constructively simple and reliable in use.

This aim, these objects and others which will become better apparent hereinafter are achieved by a device as claimed in the appended claims.

Further characteristics and advantages of the invention will become better apparent from the description of preferred but not exclusive embodiments thereof, illustrated only by way of non-limitative example in the accompanying drawings, wherein:
Figure 1 is a partially sectional side elevation view of a device according to the invention, shown in the position in which the bolt is engaged on the guide;
Figure 2 is a view, similar to Figure 1, showing the device in the position in which the bolt is disengaged from the guide;
Figure 3 is a partial front elevation view of the circuit breaker, illustrating the head portion of the slider and the recessed region.

With reference to the above cited figures, the device for fastening an electrical circuit breaker to a supporting guide, generally designated by the reference numeral 1, comprises a bolt 2, which can slide along the rear face of an electric circuit breaker 3, actuated by a return spring 4 so as to engage a protruding edge of a standardized DIN guide 5, and an actuation means, which can be accessed from the front of the electrical circuit breaker 3 in order to disengage the bolt 2. According to the invention, the actuation means is constituted by an actuation slider 6 and by an opening lever 7, slidingly in contact in a channel 8 that passes through the circuit breaker 3, so that the lever 7 moves the bolt 2 into the disengagement position when a portion of the slider 6 protrudes frontally from the circuit breaker 3.

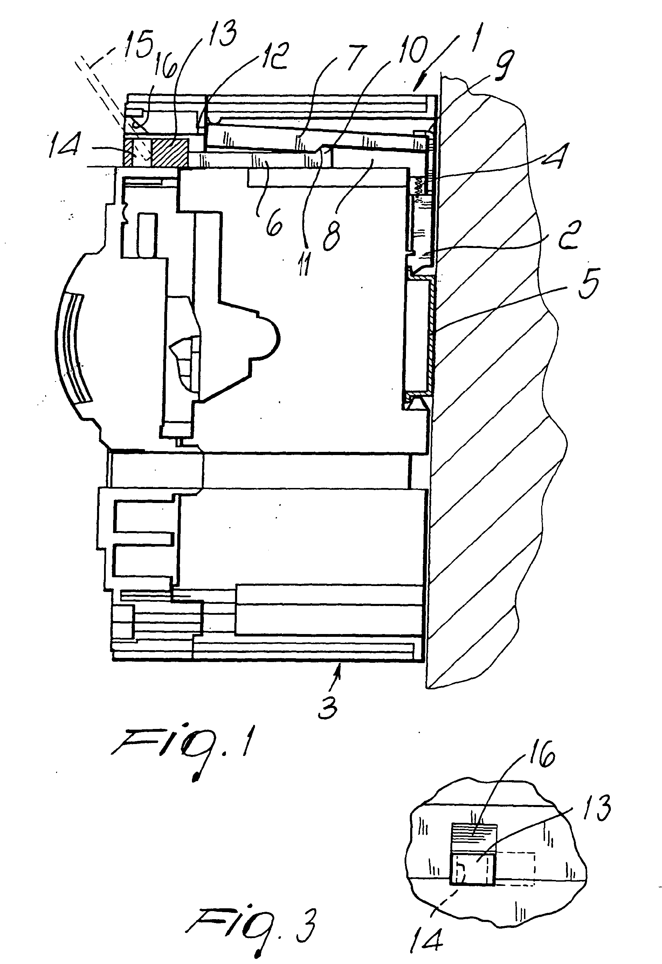

The bolt 2 is pushed constantly by the return spring 4 into the position in which it engages the protruding edge of the DIN guide 5, as shown in Figure 1, since the spring 4 is fixed to a portion of the rear face of the circuit breaker 3. The bolt 2 has a hook-shaped tab 9, by virtue of which it is associated with a first end of the opening lever 7. The actuation slider has a cam-like portion 10, which makes contact, in a lower region, with the opening lever 7 proximate to an inclined surface 11 formed on the lever 7 at a recessed region of its cross-section. A second end of the opening lever is substantially pivoted within the channel 8 between an abutment surface 12 and the actuation slider 6. The slider further has a head portion 13, which can be accessed from the front of the circuit breaker 3 and has a cavity 14 suitable to receive a tool 15 so as to be able to force the sliding of the slider 6 in order to disengage the bolt 2.

The containment body of the circuit breaker 3 has, at the head portion 13 of the slider 6, a recessed region 16 in order to facilitate the insertion of the tool 15 in the cavity 14 and actuate the slider 6. The recessed region 16 can be provided in positions that allow to insert the tool 15 in the cavity 14 from above or laterally.

The operation of the device is as follows, as shown in Figure 3.

When the bolt 2 engages the protruding edge of the DIN guide 5, the actuation slider 6 is inserted in the channel 8, so that the head portion 13 does not protrude frontally from the containment body of the circuit breaker 3. The cam-like portion 10 of the slider 6 makes contact with the opening lever 7 at its narrower cross-section, thus defining an inactive contact position in which the end of the lever 7 rigidly coupled to the bolt is actuated in the direction in which the return spring 4 pushes the bolt into engagement with the edge, shown in Figure 1.

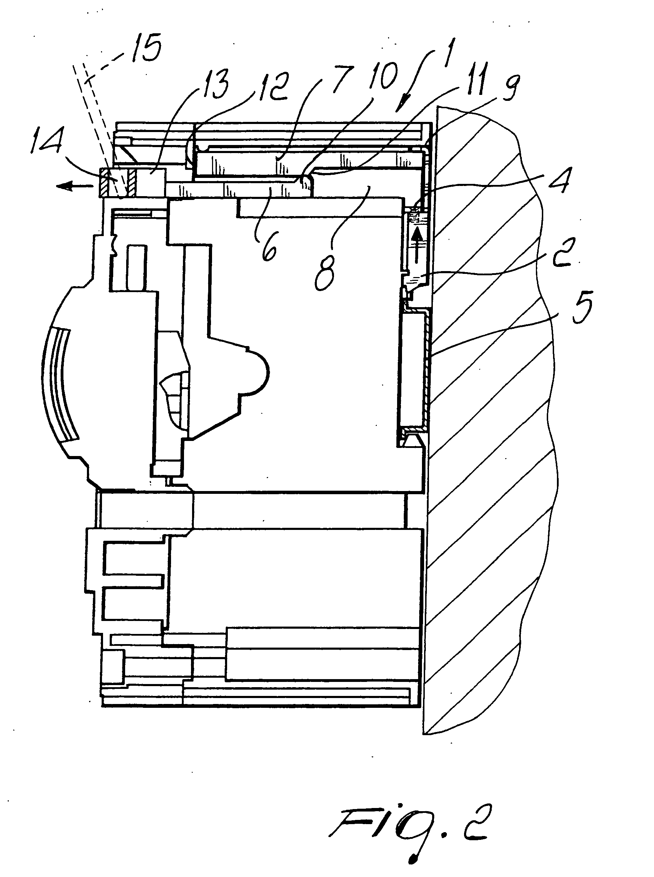

With the aid of the tool 15, inserted by virtue of the recess 16 in the cavity 14, the slider 6 is forced to slide outward so that the head portion 13 protrudes frontally from the containment body of the circuit breaker. The motion of the slider 6 causes the cam-like portion 10 to slide along the inclined surface 11 and thus make contact with the portion of the lever 7 that has a wider cross-section in an active contact position. Accordingly, the lever 7 is moved so as to draw the bolt 2, moving it away from the protruding edge of the DIN guide, overcoming the return action of the spring 4, as shown in Figure 2.

It is sufficient to push the slider inward, by simply pressing on the head portion 13, in order to return the cam-like portion 10 into the inactive contact position, as described above, so that the bolt again engages the edge of the DIN guide.

Any covering members, not shown in the figures, which are applied to the circuit breaker abut against the head portion 13, automatically fastening the circuit breaker to the DIN guide.

In practice it has been observed that the invention achieves the intended aim and objects, a device for fastening an electrical circuit breaker to a supporting guide having been provided which allows to detect immediately the operating position of the bolt.

The device has the advantage that the installation of the circuit breaker is particularly quick, since it can be performed directly without using a tool.

The device according to the invention is susceptible of numerous modifications and variations, within the scope of the appended claims. All the details may be replaced with technically equivalent elements.

The materials used, as well as the dimensions, may of course be any according to requirements and to the state of the art.

## Claims

1. A device for fastening an electrical circuit breaker to a supporting guide, having at least one protruding edge that comprises a bolt (2) that can slide along the rear face of said circuit breaker (3) and is adapted to engage said edge so as to fasten said circuit breaker (3) to said guide, and an actuation means adapted to disengage said bolt (2) from said edge, **characterized in that** said actuation means comprises an actuation slider (6), which can be actuated from the front on said circuit breaker (3), and a release lever (7), both arranged along a channel (8) that passes through said circuit breaker (3), said lever (7) being connected to said bolt (2), said slider (6) making sliding contact with said lever (7) in order to define an active contact position and an inactive contact position, said lever (7) disengaging said bolt (2) and said slider (6) protruding frontally from said circuit breaker (3) in said active contact position, said bolt (2) remaining engaged with said edge and said slider (6) not protruding from said circuit breaker (3) in said inactive contact position.

2. The device according to claim 1, **characterized in that** said actuation slider (6) comprises a cam-like portion (10) which makes contact, in a lower region, with the opening lever (7) proximate to an inclined surface (11), said inclined surface (11) being formed on the lever (7) at a recessed region of its cross-section.

3. The device according to claim 1 or 2, **characterized in that** said lever (7) has a first end, which is coupled to said bolt (2), and a second end, which is substantially pivoted inside said channel (8) between an abutment surface (12) and said actuation slider (6).

4. The device according to one or more of the preceding claims, **characterized in that** said slider (6) comprises a head portion (13) which can be accessed from the front of said circuit breaker (3) and has a cavity (14) adapted to receive a tool (15), so that it is possible to force the sliding of said slider (6) in order to disengage said bolt (2).

5. The device according to one or more of the preceding claims, **characterized in that** the containment body of said circuit breaker (3) has, at said head portion (13) of said slider (6), a recessed region (16) for facilitating the insertion of the tool (15) in said cavity (14) and for actuating said slider (6), said recessed region (16) being provided in positions which allow to insert the tool (15) in said cavity (14) from above or from the side.

6. The device according to one or more of the preceding claims, **characterized in that** said actuation slider (6) is made to slide in said channel (8) so that said head portion (13) does not protrude frontally from the containment body of said circuit breaker (3), said cam-like
portion (10) making contact with said opening lever (7) at its narrow cross-section, defining said inactive contact position in which the end of said lever (7) rigidly coupled to the bolt (2) is actuated in the direction in which said return spring (4) pushes said bolt (2) into engagement with said edge.

7. The device according to one or more of the preceding claims, **characterized in that** by using a tool (15) inserted in said cavity (14) said slider (6) is forced to slide outward so that said head portion (13) protrudes frontally from the containment body of said circuit breaker (3), said cam-like portion (10) sliding along said inclined surface (11) and making contact with a portion having a wider cross-section of said lever (7) in said active contact position, said lever (7) being moved so as to draw said bolt (2), moving it away from the protruding edge of said guide (5), overcoming the return action of said spring (4).

8. The device according to one or more of the preceding claims, **characterized in**
**that** said head portion (13) can be closed automatically by applying a covering member to said circuit breaker (3), automatically fastening said breaker (3) to said guide (5).

## Patentansprüche

1. Vorrichtung zum Befestigen eines Stromkreisunterbrechers an einer wenigstens eine vorstehende Kante aufweisenden Tragschiene, die einen Bolzen (2), der längs der hinteren Fläche des Stromkreisunterbrechers (3) gleiten kann und dazu ausgelegt ist, mit der Kante in Eingriff zu gelangen, um so den Stromkreisunterbrecher (3) an der Schiene zu befestigen, und ein Betätigungsmittel, das dazu ausgelegt ist, den Eingriff des Bolzens (2) mit der Kante zu lösen, umfasst, **dadurch gekennzeichnet, dass** das Betätigungsmittel einen Betätigungsgleiter (6), der von der Vorderseite des Stromkreisunterbreahers (3) betätigt werden kann, und einen Freigabehebel (7), die beide längs eines Kanals (8) angeordnet sind, der durch den Stromkreisunterbrecher (3) verläuft, umfasst, wobei der Hebel (7) mit dem Bolzen (2) verbunden ist, wobei der Gleiter (6) einen Gleitkontakt mit dem Hebel (7) herstellt, um eine aktive Kontaktposition und eine inaktive Kontaktposition zu definieren, wobei der Hebel (7) in der aktiven Kontaktposition den Eingriff des Bolzens (2) mit dem von dem Stromkreisunterbrecher (3) nach vorn vorstehenden Gleiter (6) löst und wobei in der inaktiven Kontaktposition der Bolzen (2) mit der Kante in Eingriff bleibt und der Gleiter (6) nicht von dem Stromkreisunterbrecher (3) vorsteht.

2. Vorrichtung nach Anspruch 1, **dadurch gekennzeichnet, dass** der Betätigungsgleiter (6) einen nockenartigen Abschnitt (10) umfasst, der in einem unteren Bereich einen Kontakt mit dem Öffnungshebel (7) in der Nähe einer geneigten Oberfläche (11) herstellt, wobei die geneigte Oberfläche (11) an dem Hebel (7) in einem Bereich ausgebildet ist, der im Querschnitt ausgespart ist.

3. Vorrichtung nach Anspruch 1 oder 2, **dadurch gekennzeichnet, dass** der Hebel (7) ein erstes Ende, das mit dem Bolzen (2) gekoppelt ist, und ein zweites Ende, das im wesentlichen in den Kanal (8) zwischen einer Anschlagoberfläche (12) und dem Betätigungsgleiter (6) geschwenkt ist, besitzt.

4. Vorrichtung nach einem oder mehreren der vorhergehenden Ansprüche, **dadurch gekennzeichnet, dass** der Gleiter (6) einen Kopfabschnitt (13) aufweist, auf den von der Vorderseite des Stromkreisunterbrechers (3) zugegriffen werden kann und der einen Hohlraum (14) besitzt, der dazu ausgelegt ist, ein Werkzeug (15) aufzunehmen, so dass es möglich ist, ein Gleiten des Gleiters (6) zu erzwingen, um den Eingriff des Bolzens (2) zu lösen.

5. Vorrichtung nach einem oder mehreren der vorhergehenden Ansprüche, **dadurch gekennzeichnet, dass** der Gehäusekörper des Stromkreisunterbrechers (3) an dem Kopfabschnitt (13) des Gleiters (6) einen ausgesparten Bereich (16) besitzt, um das Einsetzen des Werkzeugs (15) in den Hohlraum (14) zu erleichtern und um den Gleiter (6) zu betätigen, wobei der ausgesparte Bereich (16) an Positionen vorgesehen ist, die ermöglichen, das Werkzeug (15) in den Hohlraum (14) von oben oder von der Seite einzusetzen.

6. Vorrichtung nach einem oder mehreren der vorhergehenden Ansprüche, **dadurch gekennzeichnet, dass** der Betätigungsgleiter (6) ausgebildet ist, um in dem Kanal (8) zu gleiten, so dass der Kopfabschnitt (13) von dem Gehäusekörper des Stromkreisunterbrechers (3) nicht nach vorn vorsteht, wobei der nockenartige Abschnitt (10) mit dem Öffnungshebel (7) in dessen schmäleren Querschnitt einen Kontakt herstellt, der die inaktive Kontaktposition definiert, in der das Ende des Hebels (7), das mit dem Bolzen (2) starr gekoppelt ist, in der Richtung betätigt wird, in der die Rückstellfeder (4) den Bolzen (2) in einen Eingriff mit der Kante schiebt.

7. Vorrichtung nach einem oder mehreren der vorhergehenden Ansprüche, **dadurch gekennzeichnet, dass** durch verwenden eines Werkzeugs (15), das in den Hohlraum (14) eingesetzt wird, der Gleiter (6) gezwungen wird, nach außen zu gleiten, so dass der Kopfabschnitt (13) von dem Gehäusekörper des Stromkreisunterbrechers (3) nach vorn vorsteht, wobei der nockenartige Abschnitt (10) längs der geneigten Oberfläche (11) gleitet und in der aktiven Kontaktposition einen Kontakt mit einem Abschnitt des Hebels (7), der einen weiteren Querschnitt besitzt, herstellt, wobei der Hebel (7) bewegt wird, um den Bolzen (2) zu ziehen und ihn von der vorstehenden Kante der Schiene (5) weg zu bewegen und dabei die Rückstellwirkung der Feder (4) zu überwinden.

8. Vorrichtung nach einem oder mehreren der vorhergehenden Ansprüche, **dadurch gekennzeichnet, dass** der Kopfabschnitt (13) durch Anbringen eines Abdeckelements an dem Stromkreisunterbrecher automatisch geschlossen werden kann, wodurch der Unterbrecher (3) automatisch an der Schiene (5) befestigt wird.

## Revendications

1. Dispositif destiné à fixer un disjoncteur électrique sur un guide de support, présentant au moins un bord saillant qui comprend un boulon (2) qui peut glisser le long de la face arrière dudit disjoncteur (3) et qui est adapté de façon à venir en prise avec ledit bord de façon à fixer ledit disjoncteur (3) sur ledit guide, et des moyens d'actionnement destinés à dégager ledit boulon (2) dudit bord, **caractérisé en ce que** lesdits moyens d'actionnement comprennent une glissière d'actionnement (6), qui peut être actionnée à partir de l'avant dudit disjoncteur (3), et un levier de libération (7), tous deux étant agencés le long d'un canal (8) qui passe à travers ledit disjoncteur (3), ledit levier (7) étant connecté audit boulon (2), ladite glissière (6) établissant un contact glissant avec ledit levier (7) de façon à définir une position de contact active et une position de contact inactive, ledit levier dégageant ledit boulon (2) et ladite glissière (6) faisant saillie de manière frontale à partir dudit disjoncteur (3) dans ladite position de contact active, ledit boulon (2) demeurant en prise avec ledit bord et ladite glissière (6) ne faisant saillie pas à partir dudit disjoncteur (3) dans ladite position de contact inactive.

2. Dispositif selon la revendication 1, **caractérisé en ce que** ladite glissière d'actionnement (6) comprend une partie semblable à une came (10) qui établit un contact, dans une région inférieure, avec le levier d'ouverture (7) à proximité d'une surface inclinée (11), ladite surface inclinée (11) étant formée sur le levier (7) au niveau d'une région de sa section transversale en retrait.

3. Dispositif selon la revendication 1 ou la revendication 2, **caractérisé en ce que** ledit levier (7) présente une première extrémité, qui est couplée audit boulon (2), et une seconde extrémité, qui peut pivoter sensiblement à l'intérieur dudit canal (8) entre une surface de butée (12) et ladite glissière d'actionnement (6).

4. Dispositif selon l'une quelconque des revendications précédentes, **caractérisé en ce que** ladite glissière (6) comprend une partie avant (13) à laquelle il est possible d'accéder à partir de l'avant dudit disjoncteur (3) et présente une cavité (14) adaptée de façon à recevoir un outil (15), de telle sorte qu'il soit possible de forcer le glissement de ladite glissière (6) de façon à dégager ledit boulon (2).

5. Dispositif selon l'une quelconque des revendications précédentes, **caractérisé en ce que** le corps de confinement dudit disjoncteur (3) présente, au niveau de ladite partie avant (13) de ladite glissière (6), une région en retrait (16) destinée à faciliter l'insertion de l'outil (15) dans ladite cavité (14) et à actionner ladite glissière (6), ladite région en retrait (16) étant prévue dans des positions qui permettent l'insertion de l'outil (15) dans ladite cavité (14) à partir du dessus ou à partir du côté.

6. Dispositif selon l'une quelconque des revendications précédentes, **caractérisé en ce que** ladite glissière d'actionnement (6) est réalisée de façon à glisser dans ledit canal (8) de telle sorte que ladite partie avant (13) ne fasse pas saillie de manière frontale à partir du corps de confinement dudit disjoncteur (3), ladite partie semblable à une came (10) établissant un contact avec ledit levier d'ouverture (7) au niveau de sa section transversale plus étroite, en définissant ladite position de contact inactive dans laquelle l'extrémité dudit levier (7) couplé de manière rigide au boulon (2) est actionnée dans la direction dans laquelle ledit ressort de rappel (4) pousse ledit boulon (2) en prise avec ledit bord.

7. Dispositif selon l'une quelconque des revendications précédentes, **caractérisé en ce que**, en utilisant un outil (15) inséré dans ladite cavité (14), ladite glissière (6) est forcée de glisser vers l'extérieur de telle sorte que ladite partie avant (13) fasse saillie de manière frontale à partir du corps de confinement dudit disjoncteur (3), ladite partie semblable à une came (10) glissant le long de ladite surface inclinée (11) et établissant un contact avec une partie qui présente une section transversale plus large dudit levier (7) dans ladite position de contact active, ledit levier (7) étant déplacé de façon à tirer ledit boulon, en l'éloignant du bord saillant dudit guide, en surmontant l'action de rappel dudit ressort (4).

8. Dispositif selon l'une quelconque des revendications précédentes, **caractérisé en ce que** ladite partie avant (13) peut être fermée de manière automatique en appliquant un élément de couverture sur ledit disjoncteur (3), en fixant de manière automatique ledit disjoncteur (3) sur ledit guide (5).
